(19) Europäisches Patentamt
European Patent Office
Office européen des brevets

(11) Veröffentlichungsnummer: **0 039 805**
**B1**

(12) **EUROPÄISCHE PATENTSCHRIFT**

(45) Veröffentlichungstag der Patentschrift: **31.08.83**

(51) Int. Cl.³: **C 08 F 210/06**, C 08 F 236/06, C 08 F 4/68

(21) Anmeldenummer: **81103081.6**

(22) Anmeldetag: **24.04.81**

(54) **Verfahren zur Herstellung von alternierenden Butadien-Propylen-Copolymeren.**

(30) Priorität: **08.05.80 DE 3017539**

(43) Veröffentlichungstag der Anmeldung: **18.11.81 Patentblatt 81/46**

(45) Bekanntmachung des Hinweises auf die Patenterteilung: **31.08.83 Patentblatt 83/35**

(84) Benannte Vertragsstaaten: **BE DE FR GB IT NL**

(56) Entgegenhaltungen:
**DE-A-2 706 118**
**DE-A-3 006 159**

(73) Patentinhaber: **BAYER AG, Zentralbereich Patente, Marken und Lizenzen, D-5090 Leverkusen 1, Bayerwerk (DE)**

(72) Erfinder: **Wieder, Wolfgang, Dr., Walter-Flex-Strasse 11, D-5090 Leverkusen 1 (DE)**
Erfinder: **Witte, Josef, Dr., Haferkamp 10, D-5000 Köln 80 (DE)**

**EP 0 039 805 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von alternierenden Butadien-Propylen-Copolymeren

Die Anmeldung betrifft ein verbessertes Verfahren zur Herstellung von alternierenden Butadien-Propylen-Copolymeren.

Alternierende Copolymere aus Butadien und Propylen sind verschiedentlich beschrieben worden. Sie können sowohl mit titan- als auch mit vanadiumhaltigen Mischkatalysatoren hergestellt werden. Während erstere, wie z.B. in der DE-OS 2 023 405 und der DE-OS 2 112 839 beschrieben, Produkte mit hohem Molekulargewicht, aber schlechter Stereospezifität liefern, werden mit vanadiumhaltigen Systemen Polymere von hoher struktureller Regelmässigkeit, aber auch mit niedrigen Molekulargewichten erzeugt; s. hierzu DE-OS 1 963 780, 1 964 706, 2 020 168.

In der DE-OS 2 706 118 wurde ein Verfahren beschrieben, mit dem streng alternierend aufgebaute Copolymerisate aus Butadien und Propylen hergestellt werden können. Diese Produkte zeichnen sich durch hohe sterische Reinheit und hohe Molekulargewichte aus. Um diese hohen Molekulargewichte zu erzielen, sind allerdings relativ niedrige Polymerisationstemperaturen, beispielsweise −45 °C, nötig. Solche tiefen Temperaturen werfen in der Technik Probleme auf, ganz abgesehen vom Energieaufwand, der dafür erforderlich ist.

Es wurde gefunden, dass die Molekulargewichte von alternierenden Butadien-Propylen-Copolymeren deutlich erhöht werden, wenn die Polymerisation in einem molaren Überschuss an Butadien durchgeführt wird. Dadurch wird es möglich, auch bei höheren Temperaturen als bisher üblich alternierende Butadien-Propylen-Copolymere mit hohen Molekulargewichten und grosser sterischer Einheitlichkeit herzustellen. Besonders hohe Molekulargewichte werden erhalten, wenn die Polymerisation in flüssigem Butadien durchgeführt wird.

Die Erfindung betrifft somit ein verbessertes Verfahren zur Herstellung von alternierenden Copolymeren aus Butadien und Propylen, das dadurch gekennzeichnet ist, dass die Polymerisation in einem 1,2- bis 10-fachen, vorzugsweise einem 1,5–6fachen, molaren Überschuss an Butadien durchgeführt wird in Gegenwart eines metallorganischen Katalysators, bestehend aus den Komponenten

$$VO(-O-CH_2-\underset{R^2}{\overset{R^1}{\underset{|}{\overset{|}{C}}}}-R^3)_2\ Hal \text{ und } AlR_3^4$$

Dabei bedeuten
$R^1$ = Wasserstoff oder $C_1$–$C_4$-Alkyl
$R^2$ = Wasserstoff oder $C_1$–$C_4$-Alkyl
$R^3$ = $C_1$–$C_8$-Alkyl und
Hal = Chlor oder Brom
$R^4$ = $C_1$–$C_{14}$-Alkyl.

$AlR_3^4$ ist ein Aluminiumalkyl wie Trimethylaluminium, Triethylaluminium, Triisobutylaluminium, Trihexylaluminium, Triisobutylaluminium, Trioctylaluminium, wobei Triisobutylaluminium bevorzugt wird.

Als Vanadiumverbindungen seien genannt:
Dineopentyloxivanadiumoxichlorid
Diisobutoxivanadiumoxichlorid
Di-(2-Ethylhexyloxi)vanadiumoxichlorid
Neopentyloxi-butoxivanadiumoxichlorid
Neopentyloxi-octyloxivanadiumoxichlorid
2-Ethylhexyloxi-butoxivanadiumoxichlorid

Da Propylen erfindungsgemäss im Unterschuss eingesetzt wird, werden in der folgenden Beschreibung die Angaben nicht auf «Monomere» bezogen, sondern auf Propylen. Zur Polymerisation werden pro 100 g Propylen 0,1 bis 3, vorzugsweise 0,3 bis 2 mMol Vanadiumverbindung zugesetzt. Das molare Verhältnis Aluminiumalkyl zu Vanadiumverbindungen beträgt 20–2:1, bevorzugt 10–5:1.

Das Verfahren wird als Lösungspolymerisation durchgeführt. Als Lösungsmittel sind Aromaten, Cycloaliphaten und Aliphaten geeignet, z.B. Toluol, Cyclopentan, Pentan, Hexan oder Heptan, sowie Chlorkohlenwasserstoffe wie Chlorbenzol oder Dichlormethan. Die Reaktion kann aber auch in flüssigem Butadien durchgeführt werden, wobei nur ein Teil des Butadiens mit Propylen copolymerisiert, während ein weiterer Teil als Lösungsmittel fungiert.

Die Propylenkonzentration beträgt 5 bis 25 Gew.-%, vorzugsweise 10–20 Gew.-%, bezogen auf die Gesamtlösung. Die Polymerisation wird bei Temperaturen zwischen −60 °C und +20 °C, vorzugsweise bei −50 °C bis 0 °C, insbesondere bei −30 °C durchgeführt, gegenbenfalls auch unter Druck.

Nach Beendigung der Polymerisation wird der Katalysator durch Zugabe von Aminen, Alkoholen oder Carbonsäuren wie Triethylamin, Ethanol, Ameisensäure entaktiviert. Nach Zugabe eines Stabilisators, z.B. 2,6-Di-tert.-butylmethylphenol, kann das Produkt durch Ausfällen oder Strippen isoliert werden. Der gesamte Prozess, Polymerisation und Aufarbeitung, kann kontinuierlich oder diskontinuierlich durchgeführt werden.

Die erfindungsgemäss hergestellten alternierenden Butadien-Propylen-Copolymeren eignen sich für den Einsatz als Synthesekautschuk. Sie lassen sich in herkömmlicher Weise verarbeiten und vulkanisieren. Die Produkte können zur Herstellung von Autoreifen und technischen Gummiartikeln verwendet werden.

Beispiel 1
(Vergleichsbeispiel gemäss DE-OS 2 706 118)

Eine Mischung aus 700 ml trockenem n-Hexan, 108 g Butadien und 84 g Propylen (Molverhältnis 1:1) wurde unter Stickstoffatmosphäre auf −50 °C abgekühlt. Die Polymerisation wurde durch Zusatz von 8 mMol Triisobutylaluminium und 1 mMol Vanadyl-di(2,2-dimethylpropoxy)chlorid gestartet. Durch Aussenkühlung wurde die Reaktionstemperatur bei −50 °C gehalten. Nach 5-stündiger Reaktion wurde die Polymerisation durch Zusatz einer

Lösung von 10 ml Alkohol und 1 g 2,6-Di-tert.-butyl-methylphenyl in 100 ml Hexan abgestoppt. Das Produkt wurde in Alkohol ausgefällt, gewaschen und bei 50 °C im Vakuum getrocknet.

Ausbeute: 149 g [η], gemessen in Toluol bei 25 °C: 1,51 dl/gl; ML 1+4/100 °C: 51.

Beispiel 2
(Vergleichsbeispiel gemäss DE-OS 2 706 118)
Analog Beispiel 1, jedoch bei −30 °C statt −50 °C. Ausbeute: 63 g, [η] = 1,06 dl/g.

Dieses Beispiel zeigt die starke Abhängigkeit des Molekulargewichts von der Reaktionstemperatur.

Beispiel 3
(Vergleichsbeispiel gemäss DE-OS 2 706 118)
Wie Beispiel 1, jedoch in 700 ml Toluol statt n-Hexan. Ausbeute 182 g, [η]: 1.40 dl/g, ML 1+4/100 °C: 36.

Beispiel 4
Eine Monomermischung, bestehend aus 300 ml n-Hexan, 108 g Butadien und 42 g Propylen (Molverhältnis 2:1) wurde bei −50 °C nach Zugabe von 5 mMol Triisobutylaluminium und 0,5 mMol Vanadyl-di(2,2-dimethylpropoxy)-chlorid 5 Stunden polymerisiert. Aufarbeitung wie in Beispiel 1. Ausbeute: 60 g, [η] = 2.00 dl/g, ML 1+4/100 °C: 69.

Beispiel 5
Wie Beispiel 4, jedoch in 300 ml Toluol statt n-Hexan. Ausbeute: 78 g, [η] = 1.99 dl/g, ML 1+4/100 °C: 58.

Die Gegenüberstellung der Beispiele 4 und 1 bzw. 5 und 3 zeigt, dass eine Erhöhung des molaren Verhältnisses Butadien/Propylen eine deutliche Steigerung der Molekulargewichte zur Folge hat.

Beispiel 6
Analog Beispiel 4, jedoch bestand die Monomermischung aus 250 ml n-Hexan, 162 g Butadien und 42 g Propylen. Ausbeute: 51 g, [η] = 2,07 dl/g, ML 1+4/100 °C: 71.

Beispiel 7
Analog Beispiel 5, jedoch bestand die Monomermischung aus 200 ml Toluol, 162 g Butadien und 42 g Propylen (Molverhältnis 3:1) Ausbeute: 85 g, [η] = 2.16 dl/g, ML 1+4/100 °C: 76.

Beispiel 8
300 g Butadien und 50 g Propylen (Molverhältnis 4,66:1) wurden bei −30 °C unter Stickstoff vorgelegt. Nach Zugabe von 5 mMol Triisobutylaluminium und 1 mMol Vanadyldi(2,2-dimethylpropoxy)chlorid wurde 3 Stunden bei −30 °C polymerisiert. Aufarbeitung wie Beispiel 1. Ausbeute: 65 g [η] = 1,55 dl/g.

Dieses Beispiel zeigt, dass erfindungsgemäss auch bei höheren Reaktionstemperaturen hohe Molekulargewichte erzielt werden können (vgl. Beispiel 2).

**Patentansprüche**

1. Verfahren zur Herstellung von alternierenden Copolymeren aus Butadien und Propylen durch Polymerisation der Monomeren in einem Lösungsmittel in Gegenwart eines Katalysators, Entaktivierung des Katalysators nach erfolgter Polymerisation und Isolierung des Copolymeren, dadurch gekennzeichnet, dass man die Polymerisation in einem 1,2 bis 10 fachen molaren Überschuss an Butadien durchführt und als Katalysator einen metallorganischen Katalysator, bestehend aus den Komponenten

$$VO(-O-CH_2-\overset{\displaystyle R^1}{\underset{\displaystyle R^2}{\overset{|}{\underset{|}{C}}}}-R^3)_2\ \text{Hal und}\ AlR^4_3$$

einsetzt, wobei

$R^1$ Wasserstoff oder $C_1$–$C_4$-Alkyl, $R^2$ Wasserstoff oder $C_1$–$C_4$-Alkyl, $R^3$ $C_1$–$C_8$-Alkyl, Hal Chlor oder Brom und $R^4$ $C_1$–$C_{14}$-Alkyl bedeuten.

2. Verfahren gemäss Anspruch 1, dadurch gekennzeichnet, dass der Überschuss an Butadien 1,5 bis 6-fach ist.

3. Verfahren gemäss Anspruch 1 und 2, dadurch gekennzeichnet, dass als Lösungsmittel n-Hexan, Toluol oder Butadien eingesetzt wird.

4. Verfahren gemäss Anspruch 1–3, dadurch gekennzeichnet, dass die Polymerisationstemperatur −60 bis +20 °C beträgt.

5. Verfahren gemäss Ansprüchen 1–3, dadurch gekennzeichnet, dass die Polymerisationstemperatur −50 bis 0 °C beträgt.

6. Verfahren gemäss Ansprüchen 1–5, dadurch gekennzeichnet, dass die Propylenkonzentration 5 bis 25 Gew.-%, bezogen auf die Gesamtlösung, beträgt.

7. Verfahren gemäss Ansprüchen 1–5, dadurch gekennzeichnet, dass die Propylenkonzentration 10 bis 20 Gew.-%, bezogen auf die Gesamtlösung, beträgt.

8. Verfahren gemäss Ansprüchen 1–7, dadurch gekennzeichnet, dass der Katalysator in Mengen von 0,1 bis 3 mMol Vanadiumverbindungen pro 100 g Propylen eingesetzt wird.

9. Verfahren gemäss Ansprüchen 1–7, dadurch gekennzeichnet, dass der Katalysator in Mengen von 0,3 bis 2 mMol Vanadiumverbindung pro 100 g Propylen eingesetzt wird.

10. Verfahren gemäss Ansprüchen 1–9, dadurch gekennzeichnet, dass das molare Verhältnis der Katalysatorkomponenten zueinander 20–2:1 beträgt.

**Revendications**

1. Procédé de préparation de copolymères alternants du butadiène et du propylène par polymérisation des monomères dans un solvant en présence d'un catalyseur, désactivation du catalyseur après polymérisation et isolement du copolymère,

caractérisé en ce que l'on effectue la polymérisation dans un excès molaire de 1,2 à 10 fois du butadiène et en ce que l'on utilise en tant que catalyseur un catalyseur organo-métallique consistant en les composants:

$$VO(-O-CH_2-\underset{R^2}{\overset{R^1}{C}}-R^3)_2 \text{ Hal et } AlR^4_3$$

dans lesquels:

$R^1$ représente l'hydrogène ou un groupe alkyle en $C_1$–$C_4$,

$R^2$ représente l'hydrogène ou un groupe alkyle en $C_1$–$C_4$,

$R^3$ représente un groupe alkyle en $C_1$–$C_8$,

Hal représente le chlore ou le brome, et

$R^4$ représente un groupe alkyle en $C_1$–$C_{14}$.

2. Procédé selon la revendication 1, caractérisé en ce que l'excès du butadiène est de 1,5 à 6 fois.

3. Procédé selon les revendications 1 et 2, caractérisé en ce que l'on utilise en tant que solvant le n-hexane, le toluène ou le butadiène.

4. Procédé selon les revendications 1 à 3, caractérisé en ce que la température de polymérisation va de −60 à +20 °C.

5. Procédé selon les revendications 1 à 3, caractérisé en ce que la température de polymérisation va de −50 à 0 °C.

6. Procédé selon les revendications 1 à 5, caractérisé en ce que la concentration du propylène est de 5 à 25% du poids de la solution totale.

7. Procédé selon les revendications 1 à 5, caractérisé en ce que la concentration du propylène est de 10 à 20% du poids de la solution totale.

8. Procédé selon les revendications 1 à 7, caractérisé en ce que l'on utilise le catalyseur en quantités de 0,1 à 3 millimoles de composés du vanadium pour 100 g de propylène.

9. Procédé selon les revendications 1 à 7, caractérisé en ce que l'on utilise le catalyseur en quantités de 0,3 à 2 millimoles de composé du vanadium pour 100 g de propylène.

10. Procéde selon les revendications 1 à 9, caractérisé en ce que le rapport molaire des composants du catalyseur entre eux est de 20 à 2:1.

**Claims**

1. A process for the production of alternating copolymers of butadiene and propylene by polymerising the monomers in a solvent in the presence of a catalyst, deactivating the catalyst on completion of polymerisation and isolating the copolymer, characterised in that polymerisation is carried out in a 1.2- to 10-fold molar excess of butadiene and in that the catalyst used is an organometallic catalyst consisting of the components

$$VO(-O-CH_2-\underset{R^2}{\overset{R^1}{C}}-R^3)_2 \text{ Hal and } AlR^4_3$$

in which

$R^1$ denotes hydrogen or $C_1$–$C_4$-alkyl,

$R^2$ denotes hydrogen or $C_1$–$C_4$-alkyl,

$R^3$ denotes $C_1$–$C_8$-alkyl,

Hal denotes chlorine or bromine and

$R^4$ denotes $C_1$–$C_{14}$-alkyl.

2. A process according to claim 1, characterised in that the excess of butadiene is 1.5- to 6-fold.

3. A process according to claims 1 and 2, characterised in that n-hexane, toluene or butadiene is used as the solvent.

4. A process according to claims 1 to 3, characterised in that the polymerisation temperature is −60 to +20 °C.

5. A process according to claims 1 to 3, characterised in that the polymerisation temperature is −50 to 0 °C.

6. A process according to claims 1 to 5, characterised in that the concentration of propylene ist 5 to 25% by weight, based on the total solution.

7. A process according to claims 1 to 5, characterised in that the concentration of propylene is 10 to 20% by weight, based on the total solution.

8. A process according to claims 1 to 7, characterised in that the catalyst is used in quantities of from 0.1 to 3 mMoles of vanadium compounds per 100 g of propylene.

9. A process according to claims 1 to 7, characterised in that the catalyst is used in quantities of from 0.3 to 2 mMoles of vanadium compound per 100 g of propylene.

10. A process according to claims 1 to 9, characterised in that the molar ratio between the catalyst components is 20:1 to 2:1.